(19) Europäisches Patentamt
European Patent Office
Office européen des brevets

(11) **EP 2 992 394 B1**

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(21) Anmeldenummer: **14741256.3**

(22) Anmeldetag: **14.07.2014**

(51) Int Cl.:
*B61L 15/00* *(2006.01)*    *H04L 12/407* *(2006.01)*
*H04L 12/437* *(2006.01)*    *H04L 12/40* *(2006.01)*
*H04L 12/427* *(2006.01)*

(86) Internationale Anmeldenummer:
**PCT/EP2014/065036**

(87) Internationale Veröffentlichungsnummer:
**WO 2015/018607 (12.02.2015 Gazette 2015/06)**

(54) **STEUERUNGSSYSTEM FÜR EIN SCHIENENFAHRZEUG**

CONTROL SYSTEM FOR A RAIL VEHICLE

SYSTÈME DE COMMANDE POUR VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2013 DE 102013215811**

(43) Veröffentlichungstag der Anmeldung:
**09.03.2016 Patentblatt 2016/10**

(73) Patentinhaber: **Siemens Aktiengesellschaft 80333 München (DE)**

(72) Erfinder: **STEINHAUER, Gerhard 47877 Willich (DE)**

(56) Entgegenhaltungen:
**EP-A1- 2 213 545    EP-A1- 2 266 860
EP-A2- 1 422 833    WO-A1-2012/111808
DE-A1- 19 626 287    DE-A1-102011 082 516
GB-A- 2 450 520**

- **VERSTICHEL S ET AL: "On the design of a Train Communication Management platform", COMMUNICATIONS AND VEHICULAR TECHNOLOGY, 2006 SYMPOSIUM ON, IEEE, PI, 1. November 2006 (2006-11-01), Seiten 29-34, XP031062916, DOI: 10.1109/SCVT.2006.334366 ISBN: 978-0-7803-9784-2**

**Beschreibung**

Die Erfindung betrifft ein Steuerungssystem für ein Schienenfahrzeug, welches mehrere Wagen aufweist, mit zumindest einer zentralen Steuervorrichtung, die zur Steuerung wenigstens einer fahrzeugweiten Funktion auf der Basis einer globalen Information vorgesehen ist, und einem Satz von dezentralen Wagensteuereinrichtungen, die im Betrieb jeweils eine lokale Teilinformation der globalen Information enthalten.

Die Entwicklung eines leittechnischen Systems für ein Schienenfahrzeug, insbesondere einen aus mehreren Wagen bestehenden Triebzug, muss hohen Anforderungen an die Verfügbarkeit von Steuerkomponenten Rechnung tragen. Der einfache Ausfall einer solchen Komponente darf nicht die Fahrfähigkeit des Schienenfahrzeugs einschränken. Die Steuerungsfunktionen eines derartigen Triebzugs können in wagenlokale und fahrzeugweite Funktionen unterteilt werden. Für die fahrzeugweiten Funktionen werden Daten, welche wagenlokal anfallen, gesammelt und verarbeitet. Der Ausfall einer lokalen Funktion bleibt in der Regel lokal begrenzt und beeinträchtigt nicht die Fahrfähigkeit des Triebzuges als Ganzes. Der Ausfall von zentralen Funktionen kann ohne geeignete Maßnahme in der Regel zum Verlust der durch die elektronische Fahrzeugsteuerung gestützten Fahrfähigkeit führen. Meist ist dann nur noch eine Notsteuerung ohne elektronische Fahrzeugsteuerung möglich.

Um dies zu vermeiden ist bereits vorgeschlagen worden, für zentrale Funktionen redundante, zentrale Steuerungssysteme einzusetzen. Bei einem Ausfall einer zentralen Steuerung übernimmt eine redundante Steuerung zumindest die für die Fähigkeit des Schienenfahrzeugs relevanten Aufgaben.

GB 2 450 520 A beschreibt ein Kommunikationssystem zum Übertragen von Daten innerhalb eines Schienenfahrzeugs, welches einen Datenbus zum Übertragen von Daten gemäß einem Internet-Protokoll über Punkt-zu-Punkt-Verbindungen umfasst.

Der Erfindung liegt die Aufgabe zugrunde, ein Steuerungssystem zu schaffen, bei welchem eine in Bezug auf Verfügbarkeitsanforderungen ausreichende Redundanz kostengünstig und mit geringem Aufwand erreicht werden kann.

Hierzu wird vorgeschlagen, dass

- eine Datenverbindungseinrichtung mit Verbindungssegmenten vorgesehen ist, welche Wagensteuereinrichtungen benachbarter Wagen zur Herstellung einer Datenübertragung in zumindest einer Übertragungsrichtung paarweise miteinander verbinden,
- die gepaarten Wagensteuereinrichtungen und die Verbindungssegmente in der Übertragungsrichtung eine bezüglich der Teilinformationen kumulative Datenkette bilden und
- zumindest eine Ermittlungseinheit vorgesehen ist, die zur Bildung der globalen Information Daten der Datenkette erfasst und auswertet.

Hierdurch kann im Hinblick auf einen Fehlbetrieb, insbesondere einen Ausfall der zentralen Steuervorrichtung oder einer Kommunikation zwischen dieser und den Wagensteuereinrichtungen, eine vorteilhafte Redundanz zumindest bezüglich der Ermittlung der globalen Information, welche auf der Basis wenigstens eines wesentlichen Teils der Teilinformationen, insbesondere aller Teilinformationen bildbar ist, erreicht werden. Ist die zentrale Steuervorrichtung aufgrund des Fehlbetriebs nicht in der Lage, die lokalen Teilinformationen zur Bildung der globalen Information zu sammeln, kann diese mittels der Ermittlungseinheit gebildet und zur Verfügung gestellt werden. Die globale Information kann insbesondere eine bezifferbare Größe sein, wobei die lokalen Teilinformationen beispielsweise jeweils einem Bruchteil dieser Größe entsprechen. Die globale Information kann beispielsweise eine oder eine Kombination der in folgender Gruppe enthaltenen Informationen sein: Kenngröße für eine elektrische Leistung, Bremswirkungskenngröße, Zugkraftkenngröße, Geschwindigkeitskenngröße, Verzögerungskenngröße.

Außerdem kann bei einem einwandfreien Betrieb der zentralen Steuervorrichtung durch die vorgeschlagene, von dieser unabhängige Ermittlung der globalen Information mittels der Ermittlungseinheit eine Erhöhung des Niveaus der sogenannten Sicherheitsintegrität (auch "SIL" genannt) erreicht werden. Dies geht insbesondere daraus hervor, dass im vorgeschlagenen Steuerungssystem eine als sicherheitsrelevante eingestufte globale Information durch unabhängige hardwaretechnische und softwaretechnische Maßnahmen ermittelt und plausibilisiert werden kann.

Die Wagensteuereinrichtungen, die vorteilhafterweise jeweils einem unterschiedlichen Wagen zugeordnet sind, sind zweckmäßigerweise jeweils im zugeordneten Wagen des Schienenfahrzeugs angeordnet. Die Verbindungssegmente verbinden insbesondere jeweils zwei Wagensteuereinrichtungen miteinander, die in mechanisch und direkt miteinander gekoppelten Wagen angeordnet sind. Wagen in gegenüberliegenden Endbereichen des Schienenfahrzeugs - bei einer Ausbildung des Schienenfahrzeugs als Triebzug die Endwagen - können in datentechnischer Hinsicht als "benachbarte Wagen" betrachtet werden, indem ein Verbindungssegment der Datenverbindungseinrichtung zur Verbindung der Wagensteuereinrichtungen dieser Wagen vorgesehen sein kann.

Jedem Verbindungssegment sind zweckmäßigerweise Übertragungseinheiten zugeordnet, welche eine Übertragung von Daten in der zumindest einen Übertragungsrichtung zwischen den durch das Verbindungssegment gepaarten Wagensteuereinrichtungen ermöglichen. Eine Übertragungseinheit kann dabei besonders vorteilhaft zumindest teilweise von einer Kommunikationsschnittstelle einer zugeordneten Wagensteuereinrichtung gebildet sein.

Entlang einer "bezüglich der Teilinformationen kumulativen Datenkette" erfolgt eine Kettenübertragung von Informationen, bei welcher Informationen sukzessiv von Wagensteuereinrichtung zu Wagensteuereinrichtung übertragen werden und der Informationsgehalt in den Wagensteuereinrichtungen jeweils mit der jeweiligen Teilinformation erweitert wird. Hierzu sind die Wagensteuereinrichtungen der Datenkette jeweils derart eingerichtet, dass - beim Vorhandensein einer in der Übertragungsrichtung nächsten Wagensteuereinrichtung - der an diese zu übertragende Datensatz zumindest die jeweilige lokale Teilinformation und - beim Vorhandensein einer in der Übertragungsrichtung vorherigen Wagensteuereinrichtung - den Informationsgehalt des aus dieser stammenden Datensatzes berücksichtigt. Durch die Datenkette sind vorzugsweise sämtliche, funktionstüchtige Wagensteuereinrichtungen - in der entsprechenden Übertragungsrichtung betrachtet - in Reihe verbunden, wobei ein Datenfluss entlang der Datenkette hergestellt wird. Bezüglich des Datenflusses sind die Wagensteuereinrichtungen jeweils dazu vorgesehen, den von ihnen in der entsprechenden Übertragungsrichtung zu übertragenden Datensatz derart zu gestalten, dass er zumindest die jeweilige lokale Teilinformation und ggf. den Informationsgehalt des in dieser Übertragungsrichtung erhaltenen, aus der vorherigen Wagensteuereinrichtung stammenden Datensatzes enthält. Dies kann insbesondere dadurch erreicht werden, dass zumindest die innerhalb der Datenkette angeordneten Wagensteuereinrichtungen jeweils eine Datenverarbeitungseinheit aufweisen, die dazu vorgesehen ist, den in der entsprechenden Übertragungsrichtung erhaltenen Datensatz mit der jeweiligen Teilinformation zu erweitern, und den erweiterten Datensatz in dieser Übertragungsrichtung weiterzusenden.

Bei der oben beschriebenen, sukzessiven Übertragung von Wagensteuereinrichtung zu Wagensteuereinrichtung entlang einer kumulativen Datenkette in der entsprechenden Übertragungsrichtung kann vorteilhafterweise eine Sammlung der Teilinformationen erfolgen. Ist diese Datenkette offen, sind durch die kettenweise Übertragung der Datensätze vorteilhafterweise alle gesammelten Teilinformationen - in der entsprechenden Übertragungsrichtung betrachtet - am Ende der Kette, insbesondere in der das Kettenende bildenden Wagensteuereinrichtung, vorhanden. Es ist daher von Vorteil, wenn gemäß einer Ausführungsform der Erfindung die Ermittlungseinheit dieser Wagensteuereinrichtung zugeordnet und dazu vorgesehen ist, die in dieser vorhandenen Informationen zu erfassen und auszuwerten.

Gemäß einer weiteren Ausführungsform kann alternativ oder zusätzlich vorgesehen sein, dass

- mittels der Datenverbindungseinrichtung für jedes Verbindungssegment eine Datenübertragung in einer rechten und einer linken Übertragungsrichtung herstellbar ist,
- die gepaarten Wagensteuereinrichtungen und die Verbindungssegmente - in rechter Übertragungsrichtung - eine rechte, bezüglich der Teilinformationen kumulative Datenkette und - in linker Übertragungsrichtung - eine linke, bezüglich der Teilinformationen kumulative Datenkette bilden und
- die Ermittlungseinheit dazu vorgesehen ist, Datensätze, die in beiden Übertragungsrichtungen zwischen zwei gepaarten Wagensteuereinrichtungen übertragen werden, zu erfassen und auszuwerten.

Es kann hierdurch die oben beschriebene Sammlung der Teilinformationen in beiden Übertragungsrichtungen erfolgen. Dadurch kann vorteilhaft erreicht werden, dass die Datenflüsse an geeigneten Stellen in der linken und rechten Datenkette Informationsgehalte aufweisen, die komplementär sind und aus welchen die globale Information gebildet werden kann.

Die Begriffe "links" und "rechts" bezüglich der Übertragungsrichtungen dienen lediglich zur Unterscheidung zwischen den Übertragungsrichtungen entlang der Fahrzeuglängsrichtung. Deren Definition ist insbesondere von einer Ausrichtung und/oder einer Fahrtrichtung des Schienenfahrzeugs unabhängig. Sie dienen ebenfalls zur Unterscheidung der Richtung der Datenflüsse in den Datenketten, über welche vorzugsweise sämtliche, funktionstüchtige Wagensteuereinrichtungen - in der entsprechenden Übertragungsrichtung betrachtet - in Reihe verbunden sind.

Jedem Verbindungssegment sind zweckmäßigerweise Übertragungseinheiten zugeordnet, welche eine Übertragung von Daten in beiden Übertragungsrichtungen zwischen den durch das Verbindungssegment gepaarten Wagensteuereinrichtungen ermöglichen. Die Übertragungseinheiten können besonders vorteilhaft zumindest teilweise von einer Kommunikationsschnittstelle einer zugeordneten Wagensteuereinrichtung gebildet sein. Eine Übertragungseinheit kann strukturell von einer zusammenhängenden Einrichtung gebildet sein. Eine Unterscheidung zwischen einer Sende- und Empfangsfunktion einer Übertragungseinheit kann dabei auf logische Weise erfolgen. Dies kann insbesondere vorteilhaft zur Anwendung kommen, wenn im Verbindungssegment eine Leitung für beide Übertragungsrichtungen gemeinsam genutzt wird.

In einer alternativen Ausführung kann die Übertragungseinheit von räumlich voneinander getrennten Elementen gebildet sein, die sich durch ihre Sende- bzw. Empfangsfunktion voneinander unterscheiden. Dies kann insbesondere vorteilhaft zur Anwendung kommen, wenn für die Übertragungsrichtungen unterschiedliche Leitungen des Verbindungssegments vorgesehen sind.

Eine Erfassung der Datensätze in der linken und rechten Datenkette durch die Erfassungseinheit kann besonders vorteilhaft in einem Verbindungssegment der Datenverbindungseinrichtung erfolgen. Dabei kann ein Verbindungssegment für die Erfassung beliebig gewählt werden. Alternativ oder zusätzlich kann eine Erfassung der Datensätze in der linken und rechten Datenkette durch die Erfassungseinheit in einer Wagensteuereinrichtung erfolgen, wobei diese beliebig gewählt werden kann. Die Erfassung kann mittels mehrerer Ermittlungseinheiten erfolgen, wie insbesondere in mehreren Verbindungsegmenten, in mehreren Wagensteuereinrichtungen und/oder in zumindest einem Verbindungssegment und zumindest einer Wagensteuereinrichtung. Bei einer Erfassung in einer Wagensteuereinrichtung ist die Ermittlungseinheit vorteilhafterweise zumindest einer an ein Verbindungssegment angeschlossenen Kommunikationsschnittstelle der Wagensteuereinrichtung zugeordnet. Einer Wagensteuereinrichtung können außerdem mehrere Erfassungseinheiten zugeordnet werden. Insbesondere kann den Kommunikationsschnittstellen einer Wagensteuereinrichtung jeweils eine unterschiedliche Ermittlungseinheit zugeordnet sein.

Die zumindest eine Ermittlungseinheit kann von den Wagensteuereinrichtungen getrennt ausgebildet sein. Jedoch kann eine konstruktiv einfache Ausführung erreicht werden, wenn die zumindest eine Ermittlungseinheit zumindest teilweise Bestandteil einer der lokalen Wagensteuereinrichtungen ist. Dies eignet sich insbesondere für eine Erfassung der Datensätze innerhalb der Wagensteuereinrichtung.

Außerdem wird vorgeschlagen, dass zumindest eine der Wagensteuereinrichtungen dazu vorgesehen ist, die fahrzeugweite Funktion auf der Basis der mittels der Ermittlungseinheit gebildeten, globalen Information auszuführen. Hierdurch kann die Redundanz über die Ermittlung der globalen Information hinaus auf die Ausführung der fahrzeugweiten Funktion erweitert werden. Dabei kann vorteilhafterweise auf eine zweite, redundante zentrale Steuervorrichtung verzichtet werden. Hiermit können Kosten, Gewicht und Stromverbrauch dieser redundanten Steuerung sowie eine dafür notwendige Verkabelung eingespart werden.

Diese zumindest eine Wagensteuereinrichtung steht zweckmäßigerweise in Verbindung mit der zumindest einen Ermittlungseinheit, wobei die Verbindung dazu dient, die von der Erfassungseinheit gebildete globale Information für die zugeordnete Wagensteuereinrichtung zur Verfügung zu stellen. Insbesondere kann die Ermittlungseinheit zumindest teilweise Bestandteil dieser zumindest einen Wagensteuereinrichtung sein.

Dadurch kann der zumindest einen Wagensteuereinrichtung ein Abbild von Informationen des gesamten Fahrzeugs zur Verfügung gestellt werden, wodurch in dieser essentielle fahrzeugweite Funktionen realisierbar sind.

Die Redundanz kann außerdem weiter erhöht werden, wenn im Steuerungssystem ein Satz umfassend mehrere der Wagensteuereinrichtungen vorgesehen ist, wobei diese jeweils dazu vorgesehen sind, die fahrzeugweite Funktion auszuführen. In einer besonders vorteilhaften Ausführung sind sämtliche Wagensteuereinrichtungen zur Ausführung der fahrzeugweiten Funktion auszuführen.

In diesem Zusammenhang wird vorgeschlagen, dass das Steuerungssystem mehrere Ermittlungseinheiten aufweist, die jeweils einer unterschiedlichen Wagensteuereinrichtung des Satzes zugeordnet sind.

In einer vorteilhaften Weiterbildung der Erfindung sind die Wagensteuereinrichtungen mittels der Datenverbindungseinrichtung in einer ringförmigen Topologie miteinander vernetzbar. Dies kann zweckmäßigerweise mittels eines Verbindungssegments der Datenverbindungseinrichtung erreicht werden, welches bei Bedarf - insbesondere bei einem Fehlbetrieb einer der Wagensteuereinrichtungen und/oder eines der Verbindungssegmente - die Wagensteuereinrichtungen von in gegenüberliegenden Endbereichen des Schienenfahrzeugs angeordneten Wagen direkt miteinander verbindet. Dadurch kann in diesem Fehlerfall über dieses Verbindungssegment eine linke und/oder eine rechte Datenkette gebildet werden.

Ferner wird vorgeschlagen, dass das Steuerungssystem einen Fahrzeugdatenbus aufweist, durch welchen die Wagensteuereinrichtungen und die zentrale Steuervorrichtung miteinander verbunden sind, wobei die Datenverbindungseinrichtung vom Fahrzeugdatenbus unterschiedlich ist. Hierdurch kann eine vorteilhafte Redundanz hinsichtlich eines Ausfalls des Fahrzeugdatenbusses erreicht werden.

Gemäß einer vorteilhaften Ausführung der Erfindung ist die Ermittlungseinheit dazu vorgesehen, eine Summe der in den erfassten Daten enthaltenen Informationen zu bilden. Dies eignet sich insbesondere für einen Anwendungsfall, bei welchem die globale Information eine bezifferbare Größe ist.

Ferner wird ein Verfahren zur Steuerung eines Schienenfahrzeugs, welches mehrere Wagen, zumindest eine zentrale Steuervorrichtung, die zur Steuerung wenigstens einer fahrzeugweiten Funktion auf der Basis einer globalen Information vorgesehen ist, und einen Satz von dezentralen Wagensteuereinrichtungen aufweist, die im Betrieb jeweils eine lokale Teilinformation der globalen Information enthalten, vorgeschlagen, bei welchem

- Wagensteuereinrichtungen benachbarter Wagen mittels Verbindungssegmenten einer Datenverbindungseinrichtung paarweise miteinander verbunden werden,
- für jedes Verbindungssegment eine Datenübertragung zwischen den vom Verbindungssegment gepaarten Wagensteuereinrichtungen in zumindest einer Übertragungsrichtung erfolgt,
- die gepaarten Wagensteuereinrichtungen und die Verbindungssegmente in der Übertragungsrichtung eine bezüglich der Teilinformationen kumulativen Datenkette bilden und
- Daten der Datenkette erfasst und ausgewertet werden und auf der Basis der Daten die globale Information gebildet wird.

Zu den vorteilhaften Wirkungen des vorgeschlagenen Verfahrens wird auf die Ausführung oben bezüglich des Steuerungssystems verwiesen.

Die Bildung einer bezüglich der Teilinformationen kumulativen Datenkette umfasst zweckmäßigerweise folgenden Schritt: von den Wagensteuereinrichtungen in der Datenkette wird sukzessiv - beim Vorhandensein einer in der Übertragungsrichtung davor angeordneten Wagensteuereinrichtung - jeweils ein Datensatz in der Übertragungsrichtung empfangen und es wird - beim Vorhandensein einer in der Übertragungsrichtung danach angeordneten Wagensteuereinrichtung - ein weiterer Datensatz an diese übertragen, wobei der zu übertragende Datensatz zumindest die jeweilige lokale Teilinformation und - beim Vorhandensein des in der Übertragungsrichtung empfangenen Datensatzes - den Informationsgehalt dieses berücksichtigt.

Es wird ein Ausführungsbeispiel der Erfindung anhand der Zeichnungen erläutert. Es zeigen:

Figur 1: ein Schienenfahrzeug umfassend mehrere Wagen und eine Anordnung von Wagensteuereinrichtungen, in einer schematischen Seitenansicht,

Figur 2: die Anordnung von Wagensteuereinrichtungen aus Figur 1 und mit diesen gebildeten Datenketten und

Figur 3: die Anordnung aus Figur 2 bei Ausfall einer der Wagensteuereinrichtungen.

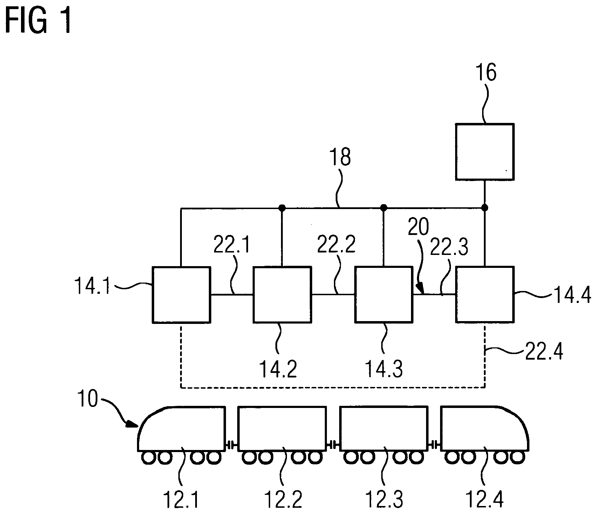

Figur 1 zeigt ein als elektrischer Triebzug ausgebildetes Schienenfahrzeug 10 in einer schematischen Seitenansicht. Es ist als ein Verband von mehreren, miteinander gekoppelten Wagen 12.1 bis 12.4 ausgebildet. Jeder Wagen 12 weist eine Vielzahl von nicht näher dargestellten Funktionskomponenten auf, welche von einer im jeweiligen Wagen 12 angeordneten Wagensteuereinrichtung 14 gesteuert werden und mit dieser durch Steuerleitungen verbunden sind. Der Übersichtlichkeit halber sind die Wagensteuereinrichtung 14 oberhalb des entsprechenden Wagens 12 vergrößert dargestellt.

Die Wagensteuereinrichtungen 14.1 bis 14.4 des Schienenfahrzeugs 10 sind miteinander und mit einer zentralen Steuervorrichtung 16 mittels eines Fahrzeugdatenbusses 18 verbunden. Der Fahrzeugdatenbus 18 dient dazu, Daten der dezentralen Wagensteuereinrichtungen 14.1 bis 14.4 zur zentralen Steuervorrichtung 16 und Steuerdaten der zentralen Steuervorrichtung 16 zu den dezentralen Wagensteuereinrichtungen 14.1 bis 14.4 zu übertragen. Der Aufbau, die Topologie und die Funktionsweise eines derartigen Fahrzeugdatenbusses 18 sind bekannt und werden nicht weiter erläutert. Beispielsweise kann der Fahrzeugdatenbus als WTB-Bus (oder "Wire Train Bus") ausgebildet sein.

Die Steuervorrichtung 16 ist zur Ausführung von fahrzeugweiten Funktionen vorgesehen. Anders formuliert ist die zentrale Steuervorrichtung 16 in ihrer Funktionsweise gegenüber den lokalen Wagensteuereinrichtungen 14.1 bis 14.4 eine übergeordnete Vorrichtung. Unter fahrzeugweiten Funktionen sollen Funktionen verstanden werden, die für den Betrieb des gesamten Schienenfahrzeugs 10, insbesondere dessen Fahrfähigkeit relevant sind. Beispielsweise kann eine fahrzeugweite Funktion in einer fahrzeugweiten Verwaltung einer verfügbaren Leistung bestehen. Eine weitere fahrzeugweite Funktion kann die Übertragung von Steuerbefehlen an eine Gruppe von Funktionskomponenten sein, die im gesamten Schienenfahrzeug 10 verteilt angeordnet sind. Eine derartige Gruppe kann Bestandteil einer Antriebs- und/oder Bremsausrüstung sein oder sie kann einer bestimmten Verbrauchergruppe, wie z.B. einer Gruppe von Klimageräten, Batterieladegeräten usw. entsprechen. Solche fahrzeugweite Funktionen werden typischerweise auf der Basis einer globalen Information ausgeführt, die sich aus einer Sammlung von lokalen, wagenbezogenen Teilinformationen bilden lässt. Im Beispiel einer fahrzeugweiten Leistungsverwaltung kann aus den in jedem Wagen 12 jeweils abgerufenen Leistungen eine auf das gesamte Schienenfahrzeug 10 bezogene Gesamtleistung gebildet werden. Die wagenbezogenen Leistungen sind als lokale Teilinformation in der jeweiligen Wagensteuereinrichtung 14 enthalten, die über den Fahrzeugdatenbus 18 an die zentrale Steuervorrichtung 16 übertragen wird. Diese sammelt die einzelnen lokalen Teilinformationen, bildet daraus die globale Information und führt eine fahrzeugweite Funktion auf deren Basis aus.

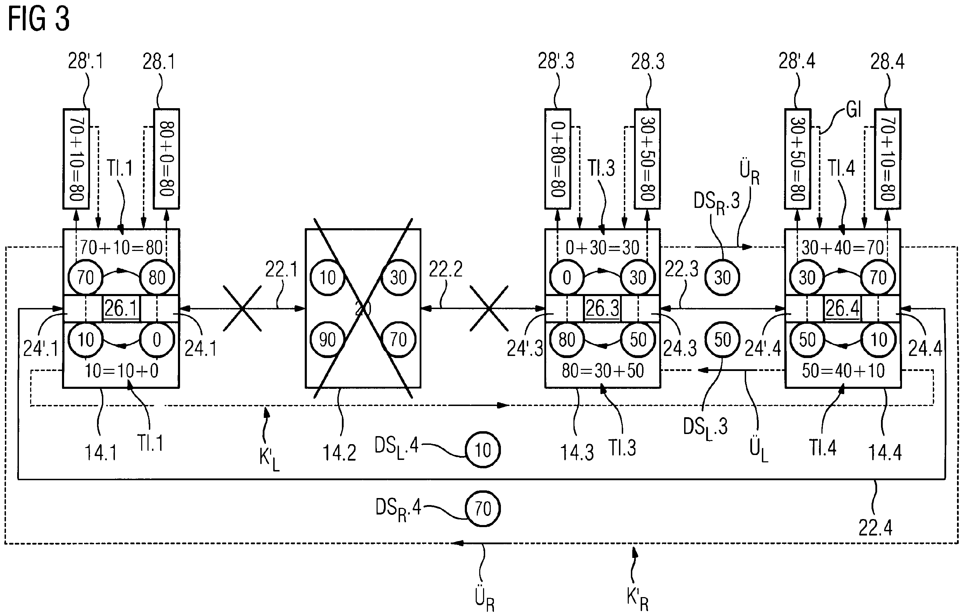

Zusätzlich zum Fahrzeugbus 18 ist eine Datenverbindungseinrichtung 20 vorgesehen, welche die Wagensteuereinrichtungen 14 von benachbarten Wagen 12 paarweise miteinander verbindet. Sie weist hierzu einen Satz von Verbindungssegmenten 22.1 bis 22.3 auf, die jeweils zwei in benachbarten Wagen 12 angeordneten Wagensteuereinrichtungen 14 miteinander verbinden. Die Verbindungssegmente 22.1 bis 22.3 erstrecken sich insbesondere im Bereich, welcher zwischen den Wagenkästen der benachbarten Wagen 12 angeordnet ist. Es ist außerdem ein Verbindungssegment 22.4 optional vorgesehen, welches die Wagensteuereinrichtungen 14.1 und 14.4 verbinden kann. Hiermit können die Wagensteuereinrichtungen 14 mittels der Datenverbindungseinrichtung 20 in einer ringförmigen Topologie miteinander vernetzt werden. Die Funktion des optionalen Verbindungssegments 22.4 wird in der Beschreibung zu Figur 3 unten näher erläutert.

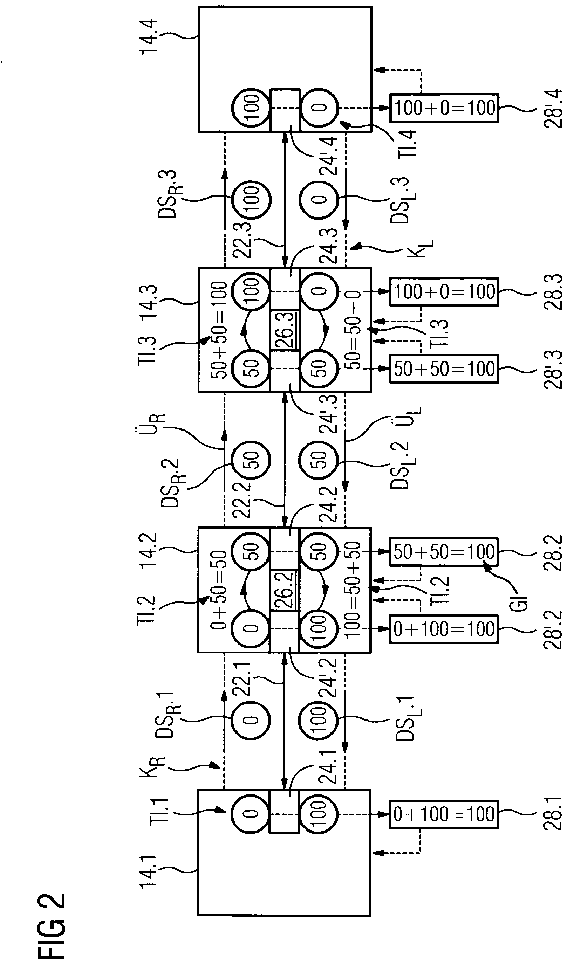

Die Anordnung der lokalen Wagensteuereinrichtungen 14 ist in Figur 2 näher dargestellt.

Die Verbindungssegmente 22.1 bis 22.3 werden jeweils von einer Struktur gebildet, die dazu geeignet ist, einen Datenaustausch zwischen den Wagensteuereinrichtungen 14 des jeweilig verbundenen Paars zu ermöglichen. Für jedes Paar von Wagensteuereinrichtungen 14 sind Übertragungseinheiten 24, 24' vorgesehen, die eine bidirektionale Übertragung von Daten zwischen den Wagensteuereinrichtungen 14 des verbundenen Paares über das zugeordnete Verbindungssegment 22 ermöglichen. So sind z.B. für das von den Wagensteuereinrichtungen 14.2 und 14.3 gebildete Paar eine erste Übertragungseinheit 24.2, die der ersten Wagensteuereinrichtung 14.2 des Paares zugeordnet ist, und eine zweite Übertragungseinheit 24'.3, die der zweiten Wagensteuereinrichtung 14.3 des Paares zugeordnet ist, vorgesehen. Insbesondere sind die Übertragungseinheiten 24, 24' jeweils von einer Schnittstelleneinheit (in der fachmännischen Sprache z.B. "Communication Port" genannt) der zugeordneten Wagensteuereinrichtung 14 gebildet, an welche das jeweilige Verbindungssegment 22 angeschlossen ist. Anders formuliert verbindet dieses Verbindungssegment 22 gegenüberliegende Schnittstelleneinheiten der gepaarten Wagensteuereinrichtungen 14, wobei diese Schnittstelleneinheiten jeweils eine Übertragungseinheit 24 bzw. 24' zur Übertragung über das Verbindungssegment 22 bilden. Die betrachteten Übertragungseinheiten 24.2, 24'.3, die durch das jeweilige Verbindungssegment 22.2 miteinander verbunden sind, ermöglicht daher sowohl eine Datenübertragung in einer linken Übertragungsrichtung $\ddot{U}_L$ zwischen der zweiten Wagensteuereinrichtung 14.3 und der ersten Wagensteuereinrichtung 14.2 des Paares als auch eine Datenübertragung in einer entgegengesetzten, rechten Übertragungsrichtung $\ddot{U}_R$ zwischen der ersten Wagensteuereinrichtung 14.2 und der zweiten Wagensteuereinrichtung 14.3 des Paares.

Ist - zusammenfassend - ein Paar von mittels eines Verbindungssegments 22 miteinander verbundenen Wagensteuereinrichtungen 14 gegeben, ist daher für dieses Paar ein entsprechendes Paar von Übertragungseinheiten 24, 24' vorgesehen, welches einen Datenaustausch, d.h. eine Datenübertragung in beiden Übertragungsrichtungen $\ddot{U}_L$ und $\ddot{U}_R$, über das Verbindungssegment 22 ermöglicht.

Die Wagensteuereinrichtungen 14 des Schienenfahrzeugs 10 bilden zusammen mit den Verbindungssegmenten 22 für jede Übertragungsrichtung $\ddot{U}_L$ und $\ddot{U}_R$ eine Datenkette $K_L$ bzw. $K_R$, welche sich entlang des gesamten Schienenfahrzeugs 10 erstreckt, wie unten näher erläutert.

Die Wagensteuereinrichtungen 14 sind hierzu jeweils grundsätzlich dazu vorgesehen, für beide Übertragungsrichtungen $\ddot{U}_R$ und $\ddot{U}_L$ einen Datensatz an eine in rechter bzw. linker Übertragungsrichtung betrachtet danach angeordnete, benachbarte Wagensteuereinrichtung 14 zu senden. Hierzu sind den Wagensteuereinrichtungen 14 jeweils zwei Übertragungseinheiten 24, 24' zugeordnet, die jeweils einer unterschiedlichen benachbarten Wagensteuereinrichtung 14 zugewandt sind. Insbesondere sind diese Übertragungseinheit 24, 24' jeweils von einer unterschiedlichen Datenschnittstelleneinheit der betrachteten Wagensteuereinrichtung 14 gebildet.

Die Übertragungseinheiten 24.1 bis 24.3 sind jeweils einer in rechter Übertragungsrichtung $\ddot{U}_R$ angeordneten benachbarten Wagensteuereinrichtung 14 zugewandt. Daher senden sie Daten in rechter Übertragungsrichtung $\ddot{U}_R$ und empfangen Daten in linker Übertragungsrichtung $\ddot{U}_L$. Die Übertragungseinheiten 24'.2 bis 24'.4 sind jeweils einer in linker Übertragungsrichtung $\ddot{U}_L$ angeordneten benachbarten Wagensteuereinrichtung 14 zugewandt. Daher senden sie Daten in linker Übertragungsrichtung $\ddot{U}_L$ und empfangen Daten in rechter Übertragungsrichtung $\ddot{U}_R$.

Die Übertragung eines Datensatzes in einer Übertragungsrichtung durch eine Wagensteuereinrichtung 14 setzt das Vorhandsein einer in dieser Übertragungsrichtung danach angeordneten Wagensteuereinrichtung 14 voraus, die empfangsbereit ist. In der in Figur 2 betrachteten Ausführung kann für die Wagensteuereinrichtungen 14, die in den Endwagen 12.1 und 12.4 angeordnet sind, eine Übertragung lediglich in einer Übertragungsrichtung erfolgen, während für die Wagensteuereinrichtungen 14 der Mittelwagen 12.2 und 12.3, die innerhalb der Datenketten $K_R$ und $K_L$ angeordnet sind, eine Übertragung in beiden Übertragungsrichtungen $\ddot{U}_L$ und $\ddot{U}_R$ stattfinden kann.

Von der Wagensteuereinrichtung 14.1 im Endwagen 12.1 ausgehend wird durch die oben beschriebenen Übertragungen von Wagensteuereinrichtung zu Wagensteuereinrichtung eine Datenkette $K_R$ in rechter Übertragungsrichtung $\ddot{U}_R$ gebildet, welche sich entlang des gesamten Schienenfahrzeugs 10 bis zur Wagensteuereinrichtung 14.4 im Endwagen 12.4 erstreckt und sämtliche Wagensteuereinrichtungen 14.1 bis 14.4 in Reihe verbindet. In ähnlicher Weise wird von dieser Wagensteuereinrichtung 14.4 ausgehend eine Datenkette $K_L$ in linker Übertragungsrichtung $\ddot{U}_L$ bis zur Wagensteuereinrichtung 14.1 gebildet. In der betrachteten Ausführung sind beide Datenketten $K_L$ und $K_R$ jeweils als offene Ketten ausgebildet und weisen die gleichen Enden auf, die von den Wagensteuereinrichtungen 14.1 und 14.4 der Endwagen 12.1 bzw. 12.4 gebildet sind.

Wie oben bereits beschrieben enthalten die Wagensteuereinrichtungen 14 jeweils eine Teilinformation TI der globalen Information. Beispielsweise wird als globale Information GI eine im Gesamtfahrzeug bezogene oder verfügbare Leistung betrachtet. Die lokalen Teilinformationen entsprechen jeweils einem Bruchteil (in Prozent) der Gesamtleistung, der lokal im entsprechenden Wagen 12 bezogen wird bzw. zur Verfügung steht. Es wird in der betrachteten Ausführung Folgendes angenommen: TI.1=0, TI.2=50, TI.3=50 und TI.4=0. Die globale Information GI entspricht der Summe aller Teilinformationen TI, d.h. es gilt GI=100.

Die Datensätze, die von den Wagensteuereinrichtungen 14 übertragen werden, sind zumindest auf der Basis der jeweiligen Teilinformation TI der entsprechenden Wagensteuereinrichtung 14 gebildet. Diese Bildung erfolgt in der betrachteten Ausführung folgendermaßen.

Die Wagensteuereinrichtungen 14.1 und 14.4, die in den Endwagen 12.1 und 12.4 angeordnet sind und jeweils ein Ende der Datenketten $K_L$ und $K_R$ bilden, senden als Datensatz ihre jeweilige Teilinformation TI.1 bzw. TI.4 an die benachbarte Wagensteuereinrichtung 14. Die Wagensteuereinrichtung 14.1 sendet mittels ihrer Übertragungseinheit 24.1 den Datensatz $DS_R.1$ in rechter Übertragungsrichtung $\ddot{U}_R$ an die in dieser Richtung danach angeordnete, benachbarte Wagensteuereinrichtung 14.2. Der Datensatz $DS_R.1$ enthält die Teilinformation TI.1=0. Die Wagensteuereinrichtung 14.4 sendet mittels ihrer Übertragungseinheit 24'.4 den Datensatz $DS_L.3$ in linker Übertragungsrichtung $\ddot{U}_L$ an die in dieser Richtung danach angeordnete, benachbarte Wagensteuereinrichtung 14.3. Der Datensatz $DS_L.3$ enthält die Teilinformation TI.4=0.

Allgemeiner formuliert wird in der rechten Datenkette $K_R$ von der Übertragungseinheit 24.i der Wagensteuereinrichtung 14.i einen Datensatz $DS_R.i$ an die in rechter Übertragungsrichtung $\ddot{U}_R$ angeordnete, benachbarte Wagensteuereinrichtung 14.i+1 gesendet. Der Datensatz $DS_R.i$ wird von der Übertragungseinheit 24'.i+1 empfangen, die dieser Wagensteuereinrichtung 14.i+1 zugeordnet ist. Es wird in der linken Datenkette $K_L$ von der Übertragungseinheit 24'.i der Wagensteuereinrichtung 14.i einen Datensatz $DS_L.(i-1)$ an die in linker Übertragungsrichtung $\ddot{U}_L$ angeordnete, benachbarte Wagensteuereinrichtung 14.i-1 gesendet. Der Datensatz $DS_L.(i-1)$ wird von der Übertragungseinheit 24.i-1 empfangen, die dieser Wagensteuereinrichtung 14.i-1 zugeordnet ist.

Die Wagensteuereinrichtungen 14.2 und 14.3, die innerhalb der Datenketten $K_L$ und $K_R$ angeordnet sind, d.h. in der betrachteten Ausführung die Wagensteuereinrichtungen der Mittelwagen 12.2 und 12.3, weisen jeweils eine Datenverarbeitungseinheit 26.2 bzw. 26.3 auf, deren Funktion nun beschrieben wird.

In Bezug auf eine Übertragungsrichtung nimmt die Datenverarbeitungseinheit 26 eine Erweiterung des von der in der jeweiligen Übertragungsrichtung empfangenen Datensatzes mit der jeweiligen Teilinformation vor. In der betrachteten Ausführung entspricht der Erweiterung einer aus dem erhaltenen Datensatz und der Teilinformation gebildeten Summe.

Für die Wagensteuereinrichtung 14.i wird - bezüglich der rechten Übertragungsrichtung $\ddot{U}_R$ - der durch die entsprechende Übertragungseinheit 24'.i empfangene Datensatz $DS_R.(i-1)$ mit der Teilinformation TI.i erweitert. Dabei wird ein erweiterter Datensatz $DS_R.i$ gemäß

$$DS_R.i \; = \; DS_R.(i-1) \; + \; TI.i$$

gebildet, welcher ggf. von der Übertragungseinheit 24.i an die in Übertragungsrichtung $\ddot{U}_R$ danach angeordnete Wagensteuereinrichtung 14.i+1 gesendet wird.

Der erweiterte Datensatz $DS_R.i$ entspricht demnach der Summe:

$$DS_R.i \; = \; \Sigma_{j=1 \text{ bis } i} \; TI.j$$

Für diese Wagensteuereinrichtung 14.i wird - bezüglich der linken Übertragungsrichtung $\ddot{U}_L$ - der durch die entsprechende Übertragungseinheit 24.i empfangene Datensatz $DS_L.i$ mit der Teilinformation TI.i erweitert. Dabei wird ein erweiterter Datensatz $DS_L.(i-1)$ gemäß

$$DS_L.(i-1) \; = \; TI.i \; + \; DS_L.i$$

gebildet, welcher ggf. von der Übertragungseinheit 24'.i an die in Übertragungsrichtung $\ddot{U}_L$ danach angeordnete Wagensteuereinrichtung 14.i-1 gesendet wird.

Der Datensatz $DS_L.i$ entspricht demnach der Summe:

$$DS_L.i \; = \; \Sigma_{j=i+1 \text{ bis } N} \; TI.j$$

wobei N der Anzahl der Wagensteuereinrichtungen 14 in den Ketten entspricht.

Durch diese Bildung von kumulativen Datenketten $K_L$ und $K_R$ kann aus den in den Datenketten $K_L$ und $K_R$ zwischen zwei benachbarten Wagensteuereinrichtungen 14 ausgetauschten Datenflüssen die globale Information GI gebildet werden. Für einen gegebenen Wert des Index i zwischen 1 und N-1, welches ein mittels des Verbindungssegments 22.i gebildetes Paar von Wagensteuereinrichtungen 14.i und 14.i+1 bezeichnet, können die zwischen diesen Wagensteuereinrichtungen ausgetauschten Datensätze $DS_R.i$ und $DS_L.i$ erfasst werden. Durch Summenbildung dieser Datensätze kann die globale Information GI gebildet werden:

$$DS_R.i \; + \; DS_L.i \; = \; \Sigma_{j=i \text{ bis } N} \; TI.j \; = \; GI$$

Die Datensätze $DS_R.i$ und $DS_L.i$ sind bezüglich der Bildung der globalen Information komplementär.

Die Erfassung der Datensätze $DS_R.i$ und $DS_L.i$ kann an einer beliebigen Stelle im entsprechenden Verbindungssegment 22.i erfolgen. Sie kann außerdem - wie in der Figur dargestellt - innerhalb einer der Wagensteuereinrichtungen 14.i und 14.i+1 erfolgen. Hierzu ist den Wagensteuereinrichtungen 14.i jeweils zumindest eine Ermittlungseinheit 28.i bzw. 28'.i zugeordnet. Beispielsweise ist den Übertragungseinheiten 24.i und 24'.i einer Wagensteuereinrichtung 14.i jeweils eine Ermittlungseinheit 28.i bzw. 28'.i zugeordnet. Die Ermittlungseinheit 28.i erfasst den von der Übertragungseinheit 24.i gesendeten und/oder zur Sendung anstehenden Datensatz $DS_R.i$ und den von der Übertragungseinheit 24.i empfangenen Datensatz $DS_L.i$. Die Ermittlungseinheit 28'.i erfasst den von der Übertragungseinheit 24'.i gesendeten und/oder zur Sendung anstehenden Datensatz $DS_L.(i-1)$ und den von der Übertragungseinheit 24'.i empfangenen Datensatz $DS_R.(i-1)$. Zum Beispiel erfasst die Ermittlungseinheit 28.2 in der rechten Datenkette $K_R$ den Datensatz $DS_R.2$, welcher der Summe der Teilinformationen TI.1=0 und TI.2=50 entspricht, und in der linken Datenkette $K_L$ den Datensatz $DS_L.2$, welcher der Summe der Teilinformationen TI.4=0 und TI.3=50 entspricht. Die Ermittlungseinheit 28'.2 erfasst in der rechten Datenkette $K_R$ den Datensatz $DS_R.1$, welcher der Teilinformation TI.1=0 entspricht, und in der linken Datenkette $K_L$ den Datensatz $DS_L.1$, welcher der Summe der Teilinformationen TI.4=0, TI.3=50 und TI.2=50 entspricht.

In der betrachteten Ausführung werden die Datensätze $DS_R.i$ und $DS_L.i$ innerhalb einer Wagensteuereinrichtung 14.i erfasst. Alternativ oder zusätzlich ist denkbar, dass die Datenflüsse der linken und rechten Datenketten $K_L$ und $K_R$ außerhalb einer Wagensteuereinrichtung 14 und demnach entlang eines zugeordneten Verbindungssegments 22.i oder 22.i-1 erfasst werden.

Die Erfassungseinheiten 28, 28' sind in den Zeichnungen jeweils als von den Wagensteuereinrichtungen 14 getrennte Einheiten dargestellt. Die Erfassungseinheiten 28, 28' können jedoch jeweils ein Bestandteil der zugeordneten Wagensteuereinrichtung 14 sein.

Die Wagensteuereinrichtungen 14.i stehen jeweils in Verbindung mit zumindest einer Ermittlungseinheit 28.i bzw. 28'.i, wobei die Verbindung dazu dient, die globale Information GI für die zugeordnete Wagensteuereinrichtung zur Verfügung zu stellen. Die Ermittlungseinheiten 28.i und 28'.i sind der Übersichtlichkeit halber von der entsprechenden Wagensteuereinrichtung 14.i getrennt dargestellt. Sie können von dieser getrennt ausgeführt sein oder einen Bestandteil derselben bilden. In einer alternativen Ausführung ist denkbar, dass einer Wagensteuereinrichtung 14.i lediglich eine Ermittlungseinheit 28.i zugeordnet ist oder dass lediglich eine Ermittlungseinheit 28 für die gesamte Anordnung von Wagensteuereinrichtungen 14 vorgesehen ist.

Zumindest eine der Wagensteuereinrichtungen 14 ist dazu vorgesehen, eine in einem normalen Betriebsmodus von der zentralen Steuervorrichtung 16 ausgeführte fahrzeugweite Funktion auf der Basis der mittels zumindest einer Ermittlungseinheit 28 gebildeten, globalen Information auszuführen. Diese Funktion wird bei der Ausführung eines Sonderbetriebsmodus, welcher durch die Erkennung eines Fehlbetriebs bzw. eines kompletten Ausfalls der zentralen Steuervorrichtung 16 ausgelöst wird, ausgeführt. Hierzu ist die zumindest eine Wagensteuereinrichtung 14 zur Ausführung der fahrzeugweiten Funktion mit einer entsprechenden Software ausgestattet. Im betrachten Ausführungsbeispiel ist jede Wagensteuereinrichtung 14.i zur Ausführung der fahrzeugweiten Funktion im Sonderbetriebsmodus ausgestattet. Dadurch, dass jeder Wagensteuereinrichtung 14.2, 14.3 der mittleren Wagen 12.2, 12.3 jeweils zwei unterschiedliche Ermittlungseinheiten 28.i und 28'.i zugeordnet sind, kann eine vorteilhafte Redundanz in der Bildung der globalen Information GI erreicht werden.

Im anhand der Figur 2 erläuterten Anwendungsfall erfolgt kein direkter Datenaustausch zwischen den Wagensteuereinrichtungen 14.1 und 14.4 der Endwagen 12.1 und 12.2. Die Wagensteuereinrichtungen 14.1 und 14.4 bilden dabei die Enden der Datenketten $K_R$ und $K_L$.

Figur 3 zeigt die Anordnung der Wagensteuereinrichtungen 14.1 bis 14.4 in einem weiteren Anwendungsfall, bei welchem eine der Wagensteuereinrichtungen 14.2, 14.3, die in einem mittleren Wagen 12.2 bzw. 12.3 angeordnet sind und sich demnach innerhalb der Datenketten $K_L$ und $K_R$ befinden, nicht funktionstüchtig ist. Dadurch sind diese Datenketten $K_L$ und $K_R$ unterbrochen. Um Datenketten $K_L'$ und $K_R'$ bereitzustellen, wird eine wirksame Datenverbindung zwischen den Wagensteuereinrichtungen 14.1 und 14.4 über das Verbindungssegment 22.4 aktiviert (siehe auch Figur 1). Die obige Beschreibung findet entsprechende Anwendung, wobei die Kettenenden nunmehr von den Wagensteuereinrichtungen 12.1 und 12.3 gebildet sind, die sich beidseitig der fehlerhaften Wagensteuereinrichtung 12.2 befinden. Zum Datenaustauch zwischen den Wagensteuereinrichtungen 12.1 und 12.4 über das Verbindungssegment 22.4 wird für beide Wagensteuereinrichtungen 14.1 und 14.4 jeweils eine Übertragungseinheit 24'.1 bzw. 24.4 aktiviert, wobei diese Übertragungseinheiten 24'.1 und 24.4 mittels des Verbindungssegments 22.4 miteinander verbunden sind. Des Weiteren werden für beide Wagensteuereinrichtungen 14.1 und 14.4 jeweils eine Datenverarbeitungseinheit 26.1 bzw. 26.4 aktiviert. Es werden ferner zwei zusätzliche Ermittlungseinheiten 28'.1 und 28.4 aktiviert, die jeweils einer der Wagensteuereinrichtungen 14.1 und 14.4 zugeordnet sind. Insbesondere ist die Ermittlungseinheit 28'.1 der Übertragungseinheit 24'.1 der Wagensteuereinrichtung 14.1 zugeordnet, während die Ermittlungseinheit 28.4 der Übertragungseinheit 24.4 der Wagensteuereinrichtung 14.4 zugeordnet ist.

Im betrachten Ausführungsbeispiel gilt TI.1=10, TI.3=30 und TI.4=40. Die globale Information GI entspricht demnach GI=80.

Zur Funktionsweise der gebildeten Datenketten KR' und KL' und die Bildung der globale Information GI auf der Basis der zwischen zwei benachbarten Wagensteuereinrichtungen 14 ausgetauschten Datensätzen wird, um unnötige Wiederholungen zu vermeiden, auf die obige Beschreibung verwiesen.

**Patentansprüche**

1. Steuerungssystem für ein Schienenfahrzeug (10), welches mehrere Wagen (12.1 - 12.4) aufweist, mit zumindest einer zentralen Steuervorrichtung (16), die zur Steuerung wenigstens einer fahrzeugweiten Funktion auf der Basis einer globalen Information (GI) vorgesehen ist, und einem Satz von dezentralen Wagensteuereinrichtungen (14.1 - 14.4), die im Betrieb jeweils eine lokale Teilinformation (TI.1 - TI.4) der globalen Information (GI) enthalten, **dadurch gekennzeichnet, dass**

   - eine Datenverbindungseinrichtung (20) mit Verbindungssegmenten (22.1, 22.2, 22.3; 22.4) vorgesehen ist, welche Wagensteuereinrichtungen (14.1 - 14.4) benachbarter Wagen (12.1 - 12.4) zur Herstellung einer Datenübertragung in zumindest einer Übertragungsrichtung ($\ddot{U}_R$, $\ddot{U}_L$) paarweise miteinander verbinden,
   - die gepaarten Wagensteuereinrichtungen (14.1 - 14.4) und die Verbindungssegmente (22.1 - 22.3; 22.4) in der Übertragungsrichtung ($\ddot{U}_R$, $\ddot{U}_L$) eine bezüglich der Teilinformationen (TI.1 - TI.4) kumulative Datenkette ($K_R$, $K_L$) bilden und
   - zumindest eine Ermittlungseinheit (28.i, 28'.i) vorgesehen ist, die zur Bildung der globalen Information (GI) Daten der Datenkette ($K_R$, $K_L$) erfasst und auswertet.

2. Steuerungssystem nach Anspruch 1, **dadurch gekennzeichnet, dass**

   - mittels der Datenverbindungseinrichtung (20) für jedes Verbindungssegment (22.1, 22.2, 22.3; 22.4) eine Datenübertragung in einer rechten (ÜR) und einer linken (ÜL) Übertragungsrichtung herstellbar ist,
   - die gepaarten Wagensteuereinrichtungen (14.1 - 14.4) und die Verbindungssegmente (22.1 - 22.3; 22.4) - in rechter Übertragungsrichtung ($\ddot{U}_R$) - eine rechte, bezüglich der Teilinformationen (TI.1 - TI.4) kumulative Datenkette ($K_R$) und - in linker Übertragungsrichtung ($\ddot{U}_L$) - eine linke, bezüglich der Teilinformationen (TI.4 - TI.1) kumulative Datenkette ($K_L$) bilden und
   - die Ermittlungseinheit (28.i, 28'.i) dazu vorgesehen ist, Datensätze ($DS_R$.i, $DS_L$.i, $DS_R$.i-1, $DS_L$.i-1), die in beiden Übertragungsrichtungen ($\ddot{U}_R$, $\ddot{U}_L$) zwischen zwei gepaarten Wagensteuereinrichtungen (14.i-1, 14.i, 14.i+1) übertragen werden, zu erfassen und auszuwerten.

3. Steuerungssystem nach Anspruch 2, **dadurch gekennzeichnet, dass** die zumindest eine Ermittlungseinheit (28.i, 28'.i) zumindest teilweise Bestandteil einer der lokalen Wagensteuereinrichtungen (14.i) ist.

4. Steuerungssystem nach einem der vorhergehenden Ansprüche, **dadurch gekennzeichnet, dass** zumindest eine der Wagensteuereinrichtungen (14.1 - 14.4) dazu vorgesehen ist, die fahrzeugweite Funktion auf der Basis der mittels der Ermittlungseinheit (28.1 - 28.3, 28'.2 - 28'.4) gebildeten, globalen Information (GI) auszuführen.

5. Steuerungssystem nach Anspruch 4, **gekennzeichnet durch** einen Satz umfassend mehrere der Wagensteuereinrichtungen (14.1 - 14.4), wobei diese jeweils dazu vorgesehen sind, die fahrzeugweite Funktion auszuführen.

6. Steuerungssystem nach Anspruch 5, **gekennzeichnet durch** mehrere Ermittlungseinheiten (28.1 - 28.3, 28'.2 - 28'.4), die jeweils einer unterschiedlichen Wagensteuereinrichtung (14.1 - 14.4) des Satzes zugeordnet sind.

7. Steuerungssystem nach einem der vorhergehenden Ansprüche,

**dadurch gekennzeichnet, dass**
die Wagensteuereinrichtungen (14.1 - 14.4) mittels der Datenverbindungseinrichtung (20) in einer ringförmigen Topologie miteinander vernetzbar sind.

8. Steuerungssystem nach einem der vorhergehenden Ansprüche,
**gekennzeichnet durch**
einen Fahrzeugdatenbus (18), **durch** welchen die Wagensteuereinrichtungen (14.1 - 14.4) und die zentrale Steuervorrichtung (16) miteinander verbunden sind, wobei die Datenverbindungseinrichtung (20) vom Fahrzeugdatenbus (18) unterschiedlich ist.

9. Steuerungssystem nach einem der vorhergehenden Ansprüche,
**dadurch gekennzeichnet, dass**
die Ermittlungseinheit (28.1 - 28.3, 28'.2 - 28'.4) dazu vorgesehen ist, eine Summe der in den erfassten Daten enthaltenen Informationen zu bilden.

10. Verfahren zur Steuerung eines Schienenfahrzeugs (10), welches mehrere Wagen (12.1 - 12.4), zumindest eine zentrale Steuervorrichtung (16), die zur Steuerung wenigstens einer fahrzeugweiten Funktion auf der Basis einer globalen Information (GI) vorgesehen ist, und einen Satz von dezentralen Wagensteuereinrichtungen (14.1 - 14.4) aufweist, die im Betrieb jeweils eine lokale Teilinformation (TI.1 - TI.4) der globalen Information (GI) enthalten, bei welchem

- Wagensteuereinrichtungen (14.1 - 14.4) benachbarter Wagen (12.1 - 12.4) mittels Verbindungssegmenten (22.1, 22.2, 22.3; 22.4) einer Datenverbindungseinrichtung (20) paarweise miteinander verbunden werden,
- für jedes Verbindungssegment (22.i) eine Datenübertragung zwischen den vom Verbindungssegment (22.i) gepaarten Wagensteuereinrichtungen (14.i, 14.i+1) in zumindest einer Übertragungsrichtung ($Ü_R$, $Ü_L$) erfolgt,
- die gepaarten Wagensteuereinrichtungen (14.1 - 14.4) und die Verbindungssegmente (22.1 - 22.3; 22.4) in der Übertragungsrichtung ($Ü_R$, $Ü_L$) eine bezüglich der Teilinformationen (TI.1 - TI.4) kumulativen Datenkette ($K_R$, $K_L$) bilden und
- Daten der Datenkette ($K_R$, $K_L$) erfasst und ausgewertet werden und auf der Basis der Daten die globale Information (GI) gebildet wird.

**Claims**

1. Control system for a rail vehicle (10), which has a plurality of cars (12.1 - 12.4), comprising at least one central control apparatus (16) provided for controlling at least one vehicle-wide function on the basis of global information (GI), and comprising a set of decentralized car control devices (14.1 - 14.4) which, during operation, in each case contain a local sub-information item (TI.1 - TI.4) of the global information (GI),
**characterized in that**

- provision is made of a data connection device (20) comprising connection segments (22.1, 22.2, 22.3; 22.4) which connect car control devices (14.1 - 14.4) of adjacent cars (12.1 - 12.4) to one another in pairs for the purpose of producing a data transfer in at least one transfer direction ($Ü_R$, $Ü_L$),
- the paired car control devices (14.1 - 14.4) and the connection segments (22.1 - 22.3; 22.4) form, in the transfer direction ($Ü_R$, $Ü_L$), a data chain ($K_R$, $K_L$) which is cumulative with respect to the sub-information items (TI.1 - TI.4), and
- provision is made of at least one determining unit (28.i, 28'.i) which detects and evaluates data of the data chain ($K_R$, $K_L$) for the purpose of forming the global information (GI).

2. Control system according to Claim 1,
**characterized in that**

- a data transfer in a right ($Ü_R$) and a left ($Ü_L$) transfer direction is producible by means of the data connection device (20) for each connection segment (22.1, 22.2, 22.3; 22.4),
- the paired car control devices (14.1 - 14.4) and the connection segments (22.1 - 22.3; 22.4) form - in the right transfer direction ($Ü_R$) - a right data chain ($K_R$) which is cumulative with respect to the sub-information items (TI.1 - TI.4), and - in the left transfer direction ($Ü_L$) - a left data chain ($K_L$) which is cumulative with respect to the sub-information items (TI.4 - TI.1) and

- the determining unit (28.i, 28'.i) is provided for detecting and evaluating data sets ($DS_R.i$, $DS_L.i$, $DS_R.i-1$, $DS_L.i-1$), which are transferred in both transfer directions ($Ü_R$, $Ü_L$) between two paired car control devices (14.i-1, 14.i, 14.i+1).

3. Control system according to Claim 2,
**characterized in that**
the at least one determining unit (28.i, 28'.i) is at least partly a constituent part of one of the local car control devices (14.i).

4. Control system according to any of the preceding claims, **characterized in that**
at least one of the car control devices (14.1 - 14.4) is provided for implementing the vehicle-wide function on the basis of the global information (GI) formed by means of the determining unit (28.1 - 28.3, 28'.2 - 28'.4).

5. Control system according to Claim 4,
**characterized by**
a set comprising a plurality of the car control devices (14.1 - 14.4), wherein the latter are in each case provided for implementing the vehicle-wide function.

6. Control system according to Claim 5,
**characterized by**
a plurality of determining units (28.1 - 28.3, 28'.2 - 28'.4) which are assigned in each case to a different car control device (14.1 - 14.4) of the set.

7. Control system according to any of the preceding claims, **characterized in that**
the car control devices (14.1 - 14.4) can be networked with one another in a ring-shaped topology by means of the data connection device (20).

8. Control system according to any of the preceding claims, **characterized by**
a vehicle data bus (18), which connects the car control devices (14.1 - 14.4) and the central control apparatus (16) to one another, wherein the data connection device (20) is different than the vehicle data bus (18).

9. Control system according to any of the preceding claims, **characterized in that**
the determining unit (28.1 - 28.3, 28'.2 - 28'.4) is provided for forming a sum of the information items contained in the detected data.

10. Method for controlling a rail vehicle (10) which has a plurality of cars (12.1 - 12.4), at least one central control apparatus (16) provided for controlling at least one vehicle-wide function on the basis of global information (GI), and a set of decentralized car control devices (14.1 - 14.4) which, during operation, in each case contain a local sub-information item (TI.1 - TI.4) of the global information (GI), wherein

- car control devices (14.1 - 14.4) of adjacent cars (12.1 - 12.4) are connected to one another in pairs by means of connection segments (22.1, 22.2, 22.3; 22.4) of a data connection device (20),
- for each connection segment (22.i) a data transfer is effected between the car control devices (14.i, 14.i+1) paired by the connection segment (22.i) in at least one transfer direction ($Ü_R$, $Ü_L$),
- the paired car control devices (14.1 - 14.4) and the connection segments (22.1 - 22.3; 22.4) form, in the transfer direction ($Ü_R$, $Ü_L$), a data chain ($K_R$, $K_L$), which is cumulative with respect to the sub-information items (TI.1 - TI.4), and
- data of the data chain ($K_R$, $K_L$) are detected and evaluated and the global information (GI) is formed on the basis of the data.

**Revendications**

1. Système de commande d'un véhicule (10) ferroviaire ayant plusieurs voitures (12.1 à 12.4), comprenant au moins un dispositif (16) central de commande, prévu pour commander au moins une fonction éloignée du véhicule sur la base d'une information (GI) globale et un jeu de dispositifs (14.1 à 14.4) décentralisés de commande de voiture, qui contiennent en fonctionnement respectivement une sous-information (TI.1 à TI.4) locale de l'information (GI) globale,

**caractérisé en ce que**

- il est prévu un dispositif (20) de liaison de données ayant des segments (22.1, 22.2, 22.3 ; 22.4) de liaison, qui relient entre eux par paire des dispositifs (14.1 à 14.4) de commandes de voiture (12.1 à 12.4) voisines, pour produire un transfert de données dans au moins un sens ($\ddot{U}_R$, $\ddot{U}_L$) de transmission,
- les dispositifs (14.1 à 14.4) de commande de voiture appariés et les segments (22.1 à 22.3 ; 22.4) de liaison forment, dans le sens ($\ddot{U}_R$, $\ddot{U}_L$) de transmission, une chaîne ($K_R$, $K_L$) de données cumulative en ce qui concerne les sous-informations (TI.1 à T1.4) et
- il est prévu au moins une unité (28.i, 28'.i) de détermination, qui, pour former l'information (GI) globale, détecte et exploite des données de la chaîne ($K_R$, $K_L$) de données.

2.  Système de commande suivant la revendication 1, **caractérisé en ce que**

- au moyen du dispositif (20) de liaison de données, il peut être produit, pour chaque segment (22.1, 22.2, 22.3 ; 22.4) de liaison, une transmission de données dans un sens de transmission à droite (ÜR) et dans un sens de transmission à gauche (ÜL),
- les dispositifs (14.1 à 14.4) de commande de voitures appariés et les segments (22.1 à 22.3 ; 22.4) de liaison forment - dans le sens ($\ddot{U}_R$) de transmission à droite - une chaîne ($K_R$) de données à droite cumulative en ce qui concerne les sous-informations (TI.1 à TI.4) et - dans le sens ($\ddot{U}_L$) de transmission à gauche - une chaîne ($K_L$) de données à gauche cumulative en ce qui concerne les sous-informations (TI.4 à TI.1) et
- l'unité (28.i, 28'.i) de détermination est prévue pour détecter et exploiter des jeux ($DS_R$.i, $DS_L$.i, $DS_R$.i-1, $DS_L$.i-1) de données, qui sont transmis dans les deux sens ($\ddot{U}_R$, $\ddot{U}_L$) de transmission, entre deux dispositifs (14.i-1, 14.i, 14.i+1) de commande de voiture appariés.

3.  Système de commande suivant la revendication 2, **caractérisé en ce que**
    la au moins une unité (28.i, 28'.i) de détermination fait partie, au moins en partie, de l'un des dispositifs (14.i) locaux de commande de voiture.

4.  Système de commande suivant l'une des revendications précédentes,
    **caractérisé en ce qu'**
    au moins l'un des dispositifs (14.1 à 14.4) de commande de voiture est prévu pour exécuter la fonction éloignée du véhicule sur la base de l'information (GI) globale formée au moyen de l'unité (28.1 à 28.3, 28'.2 à 28'.4) de détermination.

5.  Système de commande suivant la revendication 4, **caractérisé par**
    un jeu comprenant plusieurs des dispositifs (14.1 à 14.4) de commande de voiture, ceux-ci étant prévus respectivement pour exécuter la fonction éloignée du véhicule.

6.  Système de commande suivant la revendication 5, **caractérisé par**
    plusieurs unités (28.1 à 28.3, 28'.2 à 28'.4) de détermination associées respectivement à un dispositif (14.1 à 14.4) de commande de voiture différent du jeu.

7.  Système de commande suivant l'une des revendications précédentes,
    **caractérisé en ce que**
    les dispositifs (14.1 à 14.4) de commande de voiture peuvent être mis en réseau entre eux, suivant une topologie annulaire, au moyen du dispositif (20) de liaison de données.

8.  Système de commande suivant l'une des revendications précédentes,
    **caractérisé par**
    un bus (18) de données de véhicule, par lequel les dispositifs (14.1 à 14.4) de commande de voiture et le dispositif (16) central de commande sont reliés entre eux, le dispositif (20) de liaison de données étant différent du bus (18) de données de véhicule.

9.  Système de commande suivant l'une des revendications précédentes,
    **caractérisé en ce que** l'unité (28.1 à 28.3, 28'.2 à 28'.4) de détermination est prévue pour former une somme des informations contenues dans les données détectées.

10. Procédé de commande d'un véhicule (10) ferroviaire, qui a plusieurs voitures (12.1 à 12.4), au moins un dispositif (16) central de commande prévu pour commander au moins une fonction éloignée du véhicule sur la base d'une information (GI) globale et un jeu de dispositifs (14.1 à 14.4) décentralisés de commande de voiture, qui contiennent, en fonctionnement, respectivement une sous-information (TI.1 à TI.4) locale de l'information (GI) globale, dans lequel

- on relie entre eux par paire des dispositifs (14.1 à 14.4) de commandes de voiture (12.1 à 12.4) voisines au moyen de segments (22.1 ; 22.2, 22.3 ; 22.4) de liaison d'un dispositif (20) de liaison de données,
- il s'effectue, pour chaque segment (22.i) de liaison une transmission de données dans au moins un sens ($\ddot{U}_R$, $\ddot{U}_L$) de transmission entre les dispositifs (14.i, 14.i+1) de commande de voiture appariés, par le segment (22.i) de liaison,
- les dispositifs (14.1 à 14.4) de commande de voiture appariés et les segments (22.1 à 22.3 ; 22.4) de liaison forment, dans le sens ($\ddot{U}_R$, $\ddot{U}_L$) de transmission, une chaîne ($K_R$, $K_L$) de données cumulative en ce qui concerne les sous-informations (TI.1 à T1.4) et
- on détecte et on exploite des données de la chaîne ($K_R$, $K_L$) de données et on forme l'information (GI) globale sur la base des données.

FIG 1

FIG 2

# FIG 3

EP 2 992 394 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2450520 A